Europäisches Patentamt

European Patent Office

Office européen des brevets

(11) Numéro de publication: **0 253 281 B1**

# FASCICULE DE BREVET EUROPEEN

(45) Date de publication de fascicule du brevet:
**09.10.91**

(51) Int. Cl.⁵: **H04J  3/06**, H04L  7/02

(21) Numéro de dépôt: **87109798.6**

(22) Date de dépôt: **07.07.87**

(54) **Procédé et dispositif de calage en phase de trains numériques synchrones.**

(30) Priorité: **10.07.86 FR 8610093**

(43) Date de publication de la demande:
**20.01.88 Bulletin  88/03**

(45) Mention de la délivrance du brevet:
**09.10.91 Bulletin  91/41**

(84) Etats contractants désignés:
**BE DE FR GB IT LU NL SE**

(56) Documents cités:
**BE-A- 671 417**
**FR-A- 2 505 108**
**US-A- 3 306 978**
**US-A- 4 415 984**

(73) Titulaire: **ALCATEL CIT**
**12 Rue de la Baume**
**F-75008 Paris(FR)**

(72) Inventeur: **Guerin, Jean-Pierre**
**Leslach Bihan**
**F-22660 Trelevern(FR)**
Inventeur: **Le Meur, Jean-Paul**
**46, avenue de Lorraine**
**F-22300 Lannion(FR)**
Inventeur: **Morpain, Jean-Paul**
**6 rue Paul Verlaine**
**F-22300 Lannion(FR)**

(74) Mandataire: **Weinmiller, Jürgen et al**
**Lennéstrasse 9 Postfach 24**
**W-8133 Feldafing(DE)**

## Description

L'invention concerne le calage en phase de trains numériques synchrones.

Il est connu de transmettre par une ligne une information sous forme de train binaire, et le traitement de l'information nécessite souvent la lecture du train binaire par le signal d'horloge qui lui est associé. Cette lecture est généralement réalisée à l'aide d'une bascule de type D. L'information est lue sur le front montant, ou descendant, du signal d'horloge pilotant la bascule, et transmise en sortie de la bascule. Pour que la lecture se fasse correctement, l'information doit être présente au minimum un temps de prépositionnement avant le front actif, montant ou descendant, du signal d'horloge, et au minimum un temps de maintien après ce front.

Lorsqu'il y a plusieurs trains, chaque train étant transmis par une ligne, le synchronisme des trains est réalisé, conformément à la recommandation G 701 du CCITT, lorsque leurs instants significatifs apparaissent en moyenne à exactement la même cadence, les trains pouvant être affectés d'une gigue, d'amplitude comprise entre des limites spécifiées.

Il est donc possible de lire des trains numériques synchrones par un même signal d'horloge ayant la cadence d'apparition des instants significatifs des trains, dans la mesure où les conditions de temps de prépositionnement et de maintien sont respectées. Ces conditions ne posent généralement pas de problème lorsque le débit d'information est faible. Par contre, lorsque les temps de maintien et de prépositionnement, les dispersions sur les temps de propagation dans les circuits logiques et les amplificateurs à l'émission des trains, et dans les lignes de transmission, ne sont plus négligeables devant le temps bit, c'est-à-dire lorsque les trains ont des débits élevés, alors une mise en phase relative des trains devient nécessaire.

Le brevet FR-A 2 505 108 décrit un dispositif pour caler en phase plusieurs trains numériques synchrones, constitués de bits ayant chacun une durée T, par rapport à un train de bits de référence. Ce dipositif compare cycliquement la phase d'un train numérique à celle du train de référence, en détectant les transitions du train numérique à l'intérieur d'une fenêtre temporelle unique, toujours centrée autour des fronts de descente du train de bits de référence. Selon que les transitions descendantes sont, ou ne sont pas, détectées à l'intérieur de la fenêtre, le train numérique n'est pas retardé, ou bien est retardé de $\frac{T}{2}$. Pour éviter des changements de décision trop fréquents une hystérésis est créée en changeant la largeur de la fenêtre temporelle de $\frac{3T}{4}$ à $\frac{T}{4}$, et réciproquement. Ce dispositif compare la phase d'un train numérique non corrigé, par rapport à un train de bits de référence. La comparaison de phase et la correction étant réalisées en tout ou rien, la correction de phase est assez grossière.

L'invention a pour but de proposer un procédé de calage de phase procurant une meilleure précision.

L'invention a pour objet un procédé de calage en phase de trains numériques synchrones, chaque train étant constitué de bits ayant chacun une durée T, consistant à :
- prendre pour référence des intervalles de temps successifs, chacun de durée T, appelés intervalles de temps de référence, définis à partir de l'un des trains numériques synchrones ;
- retarder un deuxième train numérique synchrone à caler en phase par rapport au train de référence, en le retardant d'un retard éventuellement nul ;
    caractérisé en ce que pour déterminer le retard, il consiste à
- découper chaque intervalle de temps de référence en une pluralité de fenêtres temporelles ne se recouvrant pas mais dont l'ensemble couvre toute ladite durée ;
- détecter, dans chaque fenêtre temporelle, des transitions de début de bit d'un train numérique dit train retardé constitué du deuxième train numérique retardé d'un retard déterminé antérieurement ;
- en déduire la fenêtre temporelle dans laquelle se situent les transitions de début de bit du train retardé ;
- à appliquer au deuxième train numérique un nouveau retard pour amener les transitions de début de bit du train retardé dans l'une desdites fenêtres, appelée fenêtre de référence, correspondant au calage de phase souhaité pour le deuxième train par rapport au train de référence.

En ce qui concerne des caractéristiques d'une mise en oeuvre préférée du procédé selon l'invention et du dispositif mettant en oeuvre ce procédé, référence est faite aux revendications secondaires.

Le procédé de l'invention nécessite que les trains numériques synchrones comportent un minimum de transitions, condition généralement réalisée lorsqu'ils sont issus d'un terminal de ligne coaxiale ou optique comportant un embrouilleur ou un codeur à somme bornée.

L'invention va être décrite à l'aide d'un exemple de réalisation illustré par les figures annexées dans lesquelles :
- la figure 1 présente un schéma bloc d'un dispositif de l'invention dans le cas d'un calage en phase de deux trains,

- la figure 2 est un diagramme représentant les fenêtres temporelles délivrées par un circuit de la figure 1,
- la figure 3 est un exemple de processus de mise en phase de deux trains numériques,
- la figure 4 est un autre exemple de processus de mise en phase de deux trains numériques,
- la figure 5 est un diagramme d'états dans l'exemple de la figure 3,
- la figure 6 est un diagramme d'états dans l'exemple de la figure 4,
- la figure 7 représente un exemple de réalisation du dispositif de l'invention,
- la figure 8 représente un autre exemple de réalisation du dispositif de l'invention.

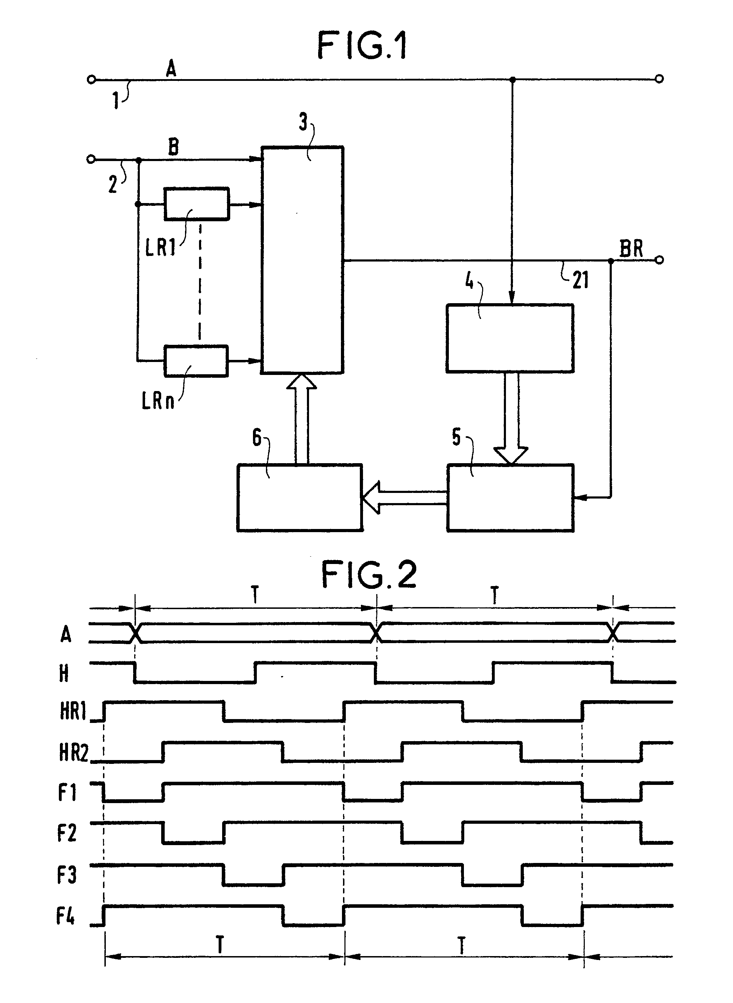

Dans le dispositif représenté figure 1, sous forme de schéma bloc, 1 et 2 sont deux lignes acheminant deux trains numériques synchrones, A et B respectivement, de cadence 1/T; des dispositifs à retard LR1 à LRn sont reliés en entrée à la ligne 2, et en sortie à un dispositif d'aiguillage 3 ; d'autre part la ligne 2 est également reliée directement au dispositif d'aiguillage ; une ligne 21 est reliée en sortie du dispositif d'aiguillage et achemine un train numérique BR qui est le train numérique B retardé, le retard étant celui introduit par l'un des dispositifs à retard dans lequel le train numérique B a transité. Un circuit de génération de fenêtres temporelles 4 est relié en entrée à la ligne 1 et en sortie à un comparateur de phase 5 ayant également une entrée reliée à la ligne 21 ; un circuit de choix du retard 6 est relié en entrée au comparateur de phase 5 et en sortie au dispositif de sélection 3.

Le circuit de génération de fenêtres temporelles 4 génère dans des intervalles de temps successifs chacun de durée égale à celle T d'un bit, définis à partir du train numérique A pris comme référence de phase et appelés ci-après intervalles de temps de référence, des fenêtres temporelles, par exemple quatre dans chaque intervalle de temps de référence. Le comparateur de phase 5, relié à la ligne 21 et au circuit de génération de fenêtres temporelles 4, permet de déterminer la fenêtre temporelle dans laquelle se produisent les transitions de niveau, positives par exemple, du train numérique de la ligne 21. L'indication de la fenêtre temporelle dans laquelle les transitions ont lieu est délivrée au circuit de choix du retard 6 qui délivre au dispositif d'aiguillage 3 un signal indiquant le dispositif à retard choisi ; à réception dudit signal le dispositif d'aiguillage relie la sortie du dispositif à retard choisi à la ligne 21. On obtient ainsi sur la ligne 21 un train numérique BR dont le retard par rapport au train numérique B est celui introduit par le dispositif à retard choisi.

L'opération est répétée jusqu'à ce que les transitions du train numérique BR se situent dans une fenêtre temporelle prédéterminée, dite de référence en fonction de la relation de phase recherchée entre les deux trains numériques. Ainsi, pour réaliser une mise en phase des deux trains, on choisira la fenêtre temporelle donnant la plus grande ouverture d'oeil commune aux deux trains. C'est ce cas que l'on considérera à titre d'exemple pour la suite.

La figure 2 est un diagramme représentant les fenêtres temporelles délivrées par le circuit de génération des fenêtres temporelles 4 de la figure 1 ; la courbe A représente le train A, pris comme référence, les temps bits du train A c'est-à-dire les intervalles des temps successifs occupés respectivement par les bits successifs de ce train sont repétés par leur durée T au-dessus de la courbe A ; la courbe H représente le signal d'horloge du train A, reconstitué à partir de ce train, dont les fronts montants coïncident avec les milieux des temps bits du train A ; la courbe HR1 est le signal d'horloge H retardé d'un temps 3T/8, c'est-à-dire de trois huitièmes de la durée T d'un temps bit; la courbe HR2 est le signal d'horloge HR1 retardé d'un temps T/4 c'est-à-dire le signal d'horloge H retardé d'un temps 5T/8 ; les courbes F1, F2, F3 et F4 représentent les quatre fenêtres temporelles, ici de durée T/4 chacune, élaborées à partir des signaux d'horloge HR1 et HR2 dans chacun des intervalles de temps de référence repérés par leur durée T au-dessous de la courbe F4. Ces intervalles de temps de référence sont ici décalés de T/8 par rapport aux temps bis du train A qui débutent ainsi au milieu de la fenêtre F1.

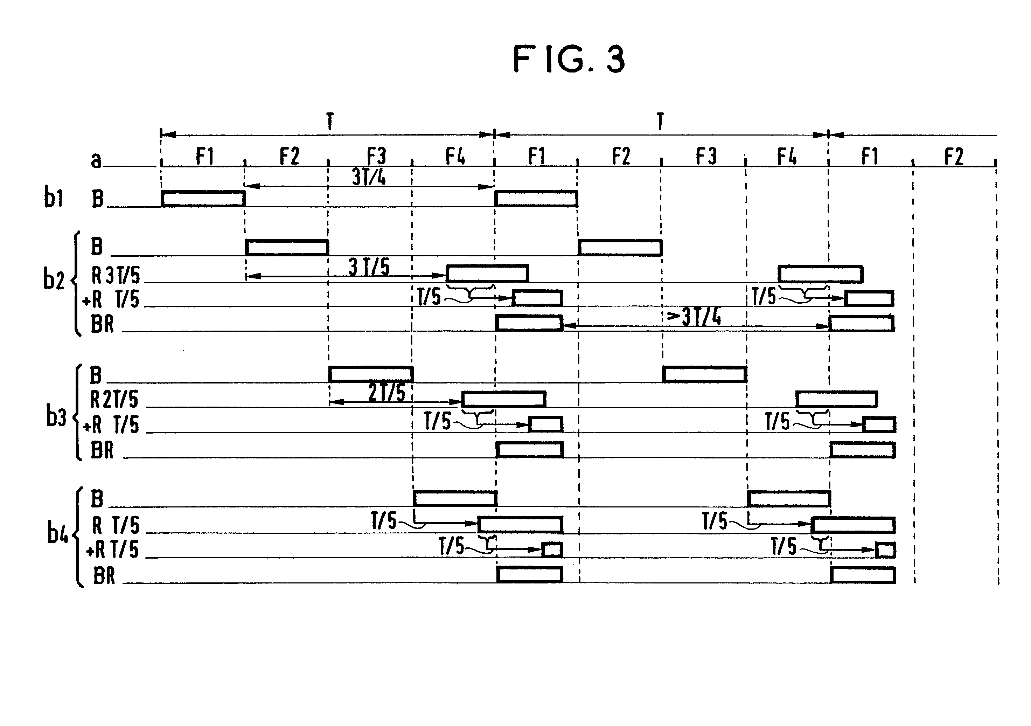

La figure 3 est un exemple de processus de mise en phase des deux trains numériques A et B, le train A étant pris comme référence ; dans cet exemple le train B peut être retardé par pas de T/5. La courbe a représente les quatre fenêtres temporelles F1 à F4, les courbes b1, b2, b3 et b4 représentent quatre cas de positionnement du train B par rapport au train A.

Dans le cas de la courbe b1, chaque transition positive du train B se produit, comme indiqué par les zones en trait fort, dans la fenêtre temporelle F1 qui suit immédiatement le début de l'intervalle de temps de référence et au milieu de laquelle débute le temps bit du train A. Cette fenêtre F1 étant choisie comme fenêtre de référence, le train B est considéré positionné correctement ; aucun retard ne lui est donc appliqué et dans la figure 1 la ligne 2 est reliée directement à la ligne 21 par le dispositif d'aiguillage.

Dans le deuxième cas, courbes b2, chaque transition positive du train B se produit dans la fenêtre temporelle F2. La courbe R 3T/5 représente la position du train B retardé d'un temps 3T/5, comme indiqué par les zones en trait fort, et l'on constate qu'une autre partie de cette zone est située dans la fenêtre temporelle F1 et qu'une autre partie de cette zone est située dans la fenêtre temporelle F4. Si la transition

3

positive du train B ainsi retardé se situe dans la fenêtre temporelle F1, le train B ainsi retardé est considéré comme positionné correctement ; si par contre la transition positive se produit dans la fenêtre temporelle F4, le retard de 3T/5 est insuffisant et il y a lieu d'introduire un retard supplémentaire de T/5, comme indiqué par la courbe RT/5. La courbe BR représente la zone dans laquelle a lieu la transition positive après positionnement final du train B, le train ayant été retardé d'un temps 3 T/5 ou d'un temps 4 T/5.

Dans la figure 1 la ligne 21 est reliée à un dispositif à retard introduisant le retard 3 T/5, par l'intermédiaire du dispositif d'aiguillage 3, et cette connexion ne change pas si le train BR est correctement positionné. Dans le cas contraire il faut introduire un retard supplémentaire de T/5 ; ceci est obtenu en reliant la ligne 21 à un dispositif à retard introduisant un retard de 4 T/5. Ainsi dans la figure 1 les dispositifs à retard LR1, LR2,...LRn, ont pour retard les valeurs T/5, 2 T/5,...n T/5, respectivement.

Dans le troisième cas, courbes b3, chaque transition positive du train B se produit dans la fenêtre temporelle F3. La courbe R 2T/5 représente la position du train B retardé d'un temps 2 T/5, comme indiqué par les zones en trait fort, et l'on constate qu'une partie de cette zone est située dans la fenêtre temporelle F1 et qu'une autre partie de cette zone est située dans la fenêtre temporelle F4. Si la transition positive du train B ainsi retardé se situe dans la fenêtre temporelle F1, le train B ainsi retardé est considéré comme positionné correctement, et la ligne 21 est reliée au dispositif à retard LR2 de retard 2 T/5. Si par contre la transition positive est située dans la fenêtre temporelle F4, il y a lieu d'introduire un retard supplémentaire de T/5, comme indiqué par la courbe RT/5, pour obtenir un retard total de 3 T/5 ; ceci est obtenu en reliant la ligne 21 au dispositif à retard LR3. La courbe BR représente la zone dans laquelle la transition positive a lieu, le train B ayant été retardé d'un temps 2T/5 ou d'un temps 3T/5.

Dans le quatrième cas, courbes b4, chaque transition positive se produit dans la fenêtre temporelle F4. La première courbe RT/5 représente la position du train B retardé d'un temps T/5 ; si la transition positive a encore lieu dans la fenêtre temporelle F4 il y a lieu d'introduire un retard supplémentaire de T/5, comme indiqué par la deuxième courbe RT/5. La courbe BR représente la zone dans laquelle la transition positive du train B a lieu, après retard de T/5 ou de 2T/5.

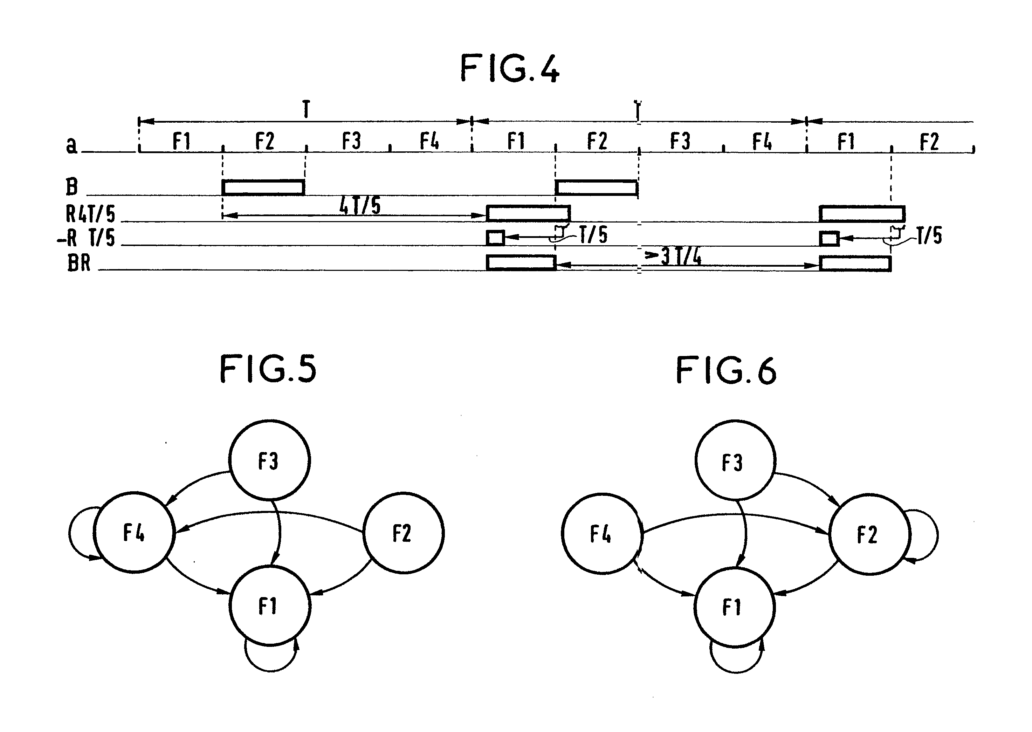

La figure 4 représente une variante du processus de positionnement du deuxième cas de la figure 3. La courbe B représente le positionnement du train B dont chaque transition positive a lieu dans la fenêtre temporelle F2. La courbe R4 T/5 représente le positionnement du train B après un retard de 4 T/5. On constate qu'une partie de la zone en trait fort est située dans la fenêtre temporelle F1 et qu'une autre partie de cette zone est située dans la fenêtre F2 ; en conséquence lorsque la transition positive a encore lieu dans la fenêtre temporelle F2, le retard de 4 T/5 est trop important et il y a lieu de le diminuer de T/5, comme indiqué par la courbe -R T/5 ce qui revient à passer du dispositif à retard LR4 au dispositif à retard LR3. La courbe BR donne la zone où a lieu la transition positive après retard de 4 T/5, ou de 3 T/5. On voit sur cette figure que le retard de 4 T/5 équivaut à une avance de T/5, et que la diminution du retard de T/5 pour la partie de la zone en trait fort située dans la fenêtre temporelle F2 équivaut à une nouvelle avance de T/5 ; la courbe BR représente la zone dans laquelle a lieu la transition positive après avance de T/5 ou de 2 T/5.

La zone BR de la figure 4 a même longueur (durée) que la zone BR de la figure 3, courbes b2, et bien que dans les deux figures cette zone soit située dans la fenêtre temporelle F1, l'une, figure 3 débute avec la fenêtre F1 et l'autre, figure 4 se termine avec la fenêtre F1.

Dans le troisième cas de la figure 3 on pourrait retarder le train B de 3 T/5 et diminuer le retard de T/5 pour la partie de la zone située encore dans la fenêtre F2.

Dans le quatrième cas de la figure 3, le train B serait retardé de 2 T/5 et ce retard serait diminué de T/5 pour la zone encore située dans la fenêtre temporelle F2.

On notera que, dans tous les cas, après mise en phase, l'ouverture d'oeil commune aux deux trains A et B est au moins égale à 3 T/4.

Afin d'augmenter cette ouverture d'oeil, on peut choisir une fenêtre de référence plus étroite que les autres fenêtres, étant bien entendu que le pas d'incrémentation des retards devra être inférieur à la largeur de la fenêtre de référence, ce qui entraîne une augmentation du nombre de dispositifs de retards, donc la complexité du dispositif de mise en phase.

Avec l'exemple de quatre fenêtres temporelles et un pas d'incrémentation des retards de T/5, le nombre n de dispositifs de retards est égal à 4 le retard maximum nécessaire étant égal à 4 T/5.

La figure 5 représente un diagramme d'états dans l'exemple de la figure 3, et la figure 6 représente un diagramme d'états dans l'exemple de la figure 4.

Dans ces deux figures 5 et 6 la boucle sur les fenêtres temporelles F2 et F4 ne peut se produire qu'une fois, contrairement à la boucle sur la fenêtre temporelle F1 qui est continuelle lorsque la mise en phase a été réalisée, sauf bien entendu si au cours du temps il se produit un déphasage relatif des trains A et B qui positionne le train B dans l'une des fenêtres F2 ou F4 et le processus de mise en phase opère alors pour remettre les trains en phase. On remarquera que si une nouvelle remise en phase, au cours du temps, doit être effectuée et qu'elle conduise à introduire un retard supplémentaire de T/5 alors que le retard était déjà de 4 T/5, cela conduit à un retard de 5 T/5 ce qui équivaut à supprimer tout retard ; ceci se produit si inititialement les transitions étaient dans la fenêtre temporelle F2 le retard appliqué étant de 4 T/5 selon l'exemple de la figure 3, et lorsque le déphasage relatif amène les transitions du train B dans la fenêtre temporelle F4. De même si le retard initial était de T/5 et que le déphasage relatif amène les transitions du train B dans la fenêtre temporelle F2, nécessitant un retard supplémentaire de 4 T/5, le retard total de 5 T/5 équivaut a un retard nul, c'est-à-dire à la suppression du retard initial. On voit donc que le nombre de dispositifs de retard limité à quatre est suffisant dans tous les cas de positionnement des transitions.

Le cas du positionnement des transitions dans la fenêtre temporelle F3 peut se produire à la mise en marche, lors de la première mise en phase des trains ; ensuite, la dérive relative étant lente, un éventuel déphasage relatif amène nécessairement les transitions dans l'une des fenêtres temporelles F2 ou F4, et le retour à la mise en phase s'effectue par passage dans au plus un état intermédiaire, comme indiqué dans les diagrammes d'états figures 5 et 6. Cet état intermédiaire peut d'ailleurs être supprimé en choisissant la largeur des fenêtres temporelles F2 et F4 inférieure ou égale à T/5 et en augmentant d'autant la largeur de la fenêtre temporelle F3.

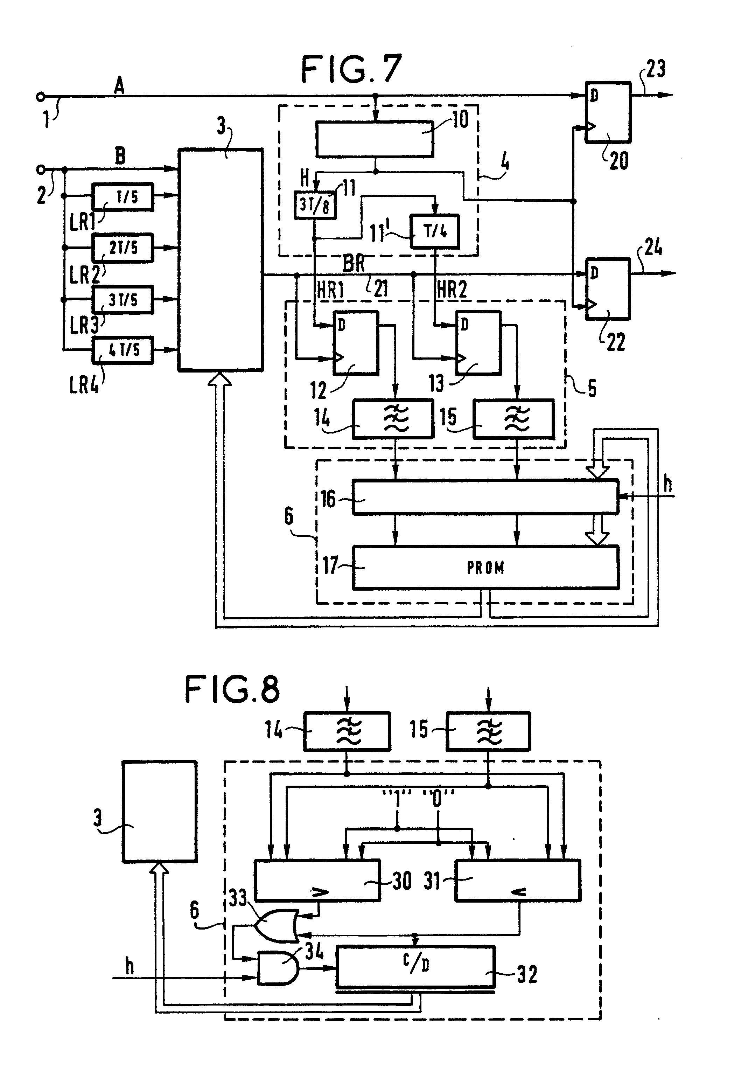

La figure 7 représente un exemple de réalisation d'un dispositif selon l'invention ; on y retrouve, avec les mêmes références, les dispositifs et circuits de la figure 1. Le circuit de génération des fenêtres temporelles 4 comporte un circuit de récupération de rythme 10 et deux dispositifs de retard 11 et 11'. Le circuit de récupération de rythme est relié en entrée à la ligne 1 et en reçoit le train numérique A ; il délivre en sortie le signal d'horloge H ; le dispositif de retard 11 reçoit le signal d'horloge H et délivre le signal d'horloge retardé HR1, ce signal étant retardé de trois huitièmes de période, 3T/8, du signal d'horloge H ; le dispositif de retard 11' délivre le signal d'horloge HR2 en retard de T/4 sur le signal d'horloge HR1 et de 5T/8 sur le signal d'horloge H. Le comparateur de phase 5 comporte deux bascules 12 et 13, de type D ; la bascule 12 a une entrée de données reliée à la sortie du dispositif de retard 11 et la bascule 13 a une entrée de données reliée à la sortie du dispositif à retard 11' ; les bascules 12 et 13 sont pilotées par les transitions, positives, du train numérique BR, leurs entrées horloge étant reliées à la ligne 21. La bascule 12 a une sortie directe reliée à un filtre 14 et la bascule 13 a une sortie directe reliée à un filtre 15 ; les filtres 14 et 15 sont des filtres passe-bas pour réduire la sensibilité du dispositif.

Le circuit de choix du retard 6 comporte un registre ou mémoire 16 piloté par un signal d'horloge h de période grande par rapport à celle T du signal d'horloge H et légèrement supérieure à la constante de temps des filtres 14 et 15 et une mémoire morte programmable 17. La mémoire 16 est reliée en entrée aux filtres 14 et 15 et mémorise les signaux délivrés par les bascules 12 et 13 après passage dans les filtres ; elle est également reliée en entrée à la sortie de la mémoire morte 17 elle-même reliée en entrée à la sortie de la mémoire 16. La sortie de la mémoire morte 17 est également reliée à une entrée de commande du dispositif d'aiguillage 3 qui est par exemple un multiplexeur.

Deux bascules 20, 22, de type D, servent à échantillonner les trains A et BR respectivement au milieu de leur ouverture d'oeil commune minimale. Elles ont leur entrée de données reliée aux lignes 1 et 21, respectivement ; elles ont leur entrée horloge reliée à la sortie du circuit récupérateur de rythme 10 duquel elles reçoivent le signal d'horloge H et sont sensibles aux fronts montants. Chaque bascule 20, 22 a une sortie directe reliée à une ligne 23 , 24, respectivement, la ligne 23 délivrant le train numérique A, la ligne 24 délivrant le train numérique BR, ces trains numériques étant en phase.

Les bascules 12 et 13 délivrent des signaux de valeur 0 ou 1, en fonction de la position des transitions positives du train numérique BR. En se reportant à la figure 2 on voit que ces signaux ont les valeurs suivantes en fonction de la fenêtre temporelle où ces transitions ont lieu :

| Fenêtre | Bascule 12 | Bascule 13 |
|---------|------------|------------|
| F1 | 1 | 0 |
| F2 | 1 | 1 |
| F3 | 0 | 1 |
| F4 | 0 | 0 |

Ces valeurs sont mémorisées dans la mémoire 16 et sont utilisées, avec l'information de sortie de la mémoire morte 17, pour un adressage de la mémoire morte. L'information délivrée par la mémoire morte correspond à un retard 0, T/5, 2 T/5, 3 T/5, 4 T/5, et sert à l'adressage du multiplexeur pour une connexion soit avec la ligne 2 (retard 0), soit avec un dispositif à retard LR1 à LR4 (retard T/5 à 4 T/5).

Ce retard avec le code de la fenêtre temporelle dans laquelle se trouvent les transitions du train BR déterminent une adresse de la mémoire morte 17.

Si par exemple le retard est 0 et que les transitions du train BR, qui est alors le train B, ont lieu dans la fenêtre temporelle F2, l'adresse du retard délivré par la mémoire morte est celle correspondant à un retard de 4 T/5, avec l'exemple de la figure 4 ; après connexion par le multiplexeur de la ligne 21 au dispositif de retard LR4, si les transitions du train BR ont lieu dans la fenêtre F1, la mémoire morte 17 délivrera la même adresse, pour le retard 4 T/5 ; si par contre les transitions ont encore lieu dans la fenêtre F2 la mémoire morte délivrera l'adresse du retard 3 T/5. De même si, alors que le train B est retardé de 4 T/5 par exemple, il se produit un déphasage relatif entre les trains A et B, donc entre le train A et le train BR, et si les transitions ont alors lieu dans la fenêtre F4, la mémoire morte délivre l'adresse du retard 4 T/5 + 2T/5 = 6T/5 soit l'adresse du retard T/5 ; si les transitions ont lieu dans la fenêtre F2 la mémoire morte délivre l'adresse du retard 4 T/5 - T/5 = 3 T/5 pour que les transitions du train BR aient lieu dans la fenêtre F1. Ensuite tant qu'il n'y a pas de déphasage entre les trains la mémoire morte délivre la même adresse du retard.

Par conséquent l'adresse délivrée par la mémoire 16 à la mémoire morte est constitué par le code de la fenêtre temporelle dans laquelle les transitions ont lieu et par l'adresse du retard précédent et tant que les transitions ont lieu dans la fenêtre temporelle F1 le retard précédent est conservé.

Les tableaux ci-après donnent la valeur du retard à apporter en fonction de la fenêtre temporelle dans laquelle ont lieu les transitions et de la valeur du retard précédent, le tableau I étant relatif au cas de la figure 4 qui est le cas où pour un décalage précédent nul les retards ont les valeurs 0, 4 T/5, 3 T/5, 2 T/5 pour les fenêtres temporelles F1, F2, F3, F4, respectivement, le tableau II étant relatif au cas de la figure 3 où pour un retard précédent nul les retards ont les valeurs 0, 3 T/5, 2 T/5, T/5 pour les fenêtres temporelles F1, F2, F3, F4, respectivement.

TABLEAU I

| RETARD | F1 | F2 | F3 | F4 |
|--------|------|------|------|------|
| 0 | 0 | 4 T/5 | 3 T/5 | 2 T/5 |
| T/5 | T/5 | 0 | 4 T/5 | 3 T/5 |
| 2 T/5 | 2 T/5 | T/5 | 0 | 4 T/5 |
| 3 T/5 | 3 T/5 | 2 T/5 | T/5 | 0 |
| 4 T/5 | 4 T/5 | 3 T/5 | 2 T/5 | T/5 |

TABLEAU II

| RETARD | F1 | F2 | F3 | F4 |
|--------|------|------|------|------|
| 0 | 0 | 3 T/5 | 2 T/5 | T/5 |
| T/5 | T/5 | 4 T/5 | 3 T/5 | 2 T/5 |
| 2 T/5 | 2 T/5 | 0 | 4 T/5 | 3 T/5 |
| 3 T/5 | 3 T/5 | T/5 | 0 | 4 T/5 |
| 4 T/5 | 4 T/5 | 2 T/5 | T/5 | 0 |

Les retards figurant dans les colonnes F1 à F4 sont ceux que la mémoire morte délivre en fonction de la fenêtre temporelle dans laquelle ont lieu les transitions et du retard précédent.

La figure 8 représente une variante de réalisation du circuit de choix du retard 6 de la figure 7.

Dans cette figure 8, deux comparateurs 30 et 31 ont deux entrées reliées aux filtres 14 et 15 du comparateur de phase 5 de la figure 7 ; ces comparateurs reçoivent également sur deux autres entrées un signal de valeur 1 et un signal de valeur 0, qui correspondent au code de la première fenêtre temporelle F1. Les sorties des comparateurs 30 et 31 sont reliées à deux entrées d'une porte logique de type "OU" 33 dont la sortie est reliée à une entrée d'une porte logique de type "et" 34 recevant par ailleurs le signal d'horloge h. La sortie de la porte 34 est reliée à l'entrée horloge d'un compteur-décompteur 32 qui reçoit par ailleurs, sur une entrée de commande de comptage/décomptage, le signal de sortie du comparateur 31. La sortie du compteur-décompteur 32, donnant le compte de celui-ci est reliée à l'entrée de commande du multiplexeur 3 de la figure 7. Les comparateurs 30 et 31 effectuent la comparaison entre le code de la fenêtre temporelle F1 et le code de la fenêtre temporelle dans laquelle ont lieu les transitions, ce code étant

EP 0 253 281 B1

donné par les signaux délivrés par les filtres 14 et 15.

Selon que le code fixe, de la fenêtre F1, est supérieur ou non au code de la fenêtre délivré par les filtres, le comparateur 30 délivre un signal de valeur 1 ou 0.

La comparateur 31 délivre un signal de valeur 1 lorsque le code fixe, de la fenêtre F1, est inférieur au code de la fenêtre délivré par les filtres, et un signal de valeur 0 dans le cas contraire.

Le signal en sortie de la porte logique 33 est donc de valeur 0 et bloque la porte logique 34 lorsqu'il y a identité entre le code de la fenêtre F1 et celui délivré par les filtres ; il est de valeur 1 et rend passante la porte logique 34 dans la cas contraire.

Tant qu'il n'y a pas identité entre le code fixe et le code reçu des filtres, le compteur-décompteur 32 reçoit une impulsion à chaque période du signal d'horloge h et avance ou recule d'un pas selon la valeur 0 et 1 appliquée à son entrée de commande de comptage-décomptage c'est-à-dire selon que le code alors délivré par les filtres 14 et 15 est celui de l'une des fenêtres F3 et F4 (dont les codes sont inférieurs à celui de la fenêtre F1) ou celui de la fenêtre F2 (dont le code est supérieur à celui de la fenêtre F1). Le compteur-décompteur 32 étant un compteur-décompteur par cinq, le nombre qu'il délivre correspond à un retard 0, T/5, 2 T/5,3 T/5 ou 4 T/5, et commande le multiplexeur. Lorsqu'il y a identité entre le code fixe et le code reçu, le compteur-décompteur ne reçoit pas d'impulsion et le nombre affiché ne change pas. La mise en phase de deux trains A et B se fait donc avec un pas de retard de T/5, et la mise en phase des trains nécessite au plus trois impulsions du signal d'horloge h; dans la réalisation de la figure 7, la mise en phase nécessite au plus deux impulsions du signal d'horloge h.

Le dispositif de la figure 8 bien que moins rapide dans les cas où la mise en phase nécessite trois impulsions du signal d'horloge h, est simple et ne nécessite pas de programmation comme c'est le cas avec la mémoire morte 17 du dispositif de la figure 7.

Les figures 7 et 8 sont des exemples de réalisation et l'on peut bien entendu remplacer tout ou partie des moyens représentés par des moyens équivalents sans sortir du cadre de l'invention.

On a décrit de façon plus particulière le cas où le calage en phase effectué est une mise en phase des trains numériques. Il est bien entendu toutefois que l'invention s'applique dans le cas où une autre relation de phase entre les trains est recherchée, le choix de la fenêtre temporelle de référence s'effectuant en fonction de la relation de phase souhaitée. Ainsi, dans l'exemple considéré précédemment où quatre fenêtres temporelles de durée T/4 chacune sont constituées, pour un déphasage souhaité de T/4, 2T/4 ou 3T/4 du train B par rapport au train A, on choisira comme fenêtre de référence la fenêtre F2, F3 ou F4.

Par ailleurs, il est bien entendu que le procédé de calage en phase décrit ci-dessus, peut s'appliquer à un nombre quelconque de trains numériques B, C, D, E , ..N, le train numérique A étant pris comme référence, et le calage en phase de chaque train numérique utilisera un dispositif de l'invention, tel que celui de la figure 7 par exemple ; on remarquera que le circuit de génération des fenêtres 4 peut être commun à plusieurs dispositifs de calage en phase, puisque le train A est pris comme référence.

**Revendications**

1. Procédé de calage en phase de trains numériques synchrones, chaque train étant constitué de bits ayant chacun une durée T, consistant à :
   - prendre pour référence des intervalles de temps successifs, chacun de durée T, appelés intervalles de temps de référence, définis à partir de l'un (A) des trains numériques synchrones ;
   - retarder un deuxième train numérique synchrone (B) à caler en phase par rapport au train de référence, en le retardant d'un retard éventuellement nul ;
         caractérisé en ce que pour déterminer le retard, il consiste à
   - découper chaque intervalle de temps de référence en une pluralité de fenêtres temporelles (F1 à F4) ne se recouvrant pas mais dont l'ensemble couvre toute ladite durée ;
   - détecter, dans chaque fenêtre temporelle, des transitions de début de bit d'un train numérique (BR) dit train retardé constitué du deuxième train numérique (B) retardé d'un retard déterminé antérieurement ;
   - en déduire la fenêtre temporelle dans laquelle se situent les transitions de début de bit du train retardé (BR) ;
   - à appliquer au deuxième train numérique (B) un nouveau retard pour amener les transitions de début de bit du train retardé (BR) dans l'une desdites fenêtres, appelée fenêtre de référence, correspondant au calage de phase souhaité pour le deuxième train par rapport au train de référence.

2. Procédé de calage en phase selon la revendication 1, caractérisé par le fait que ledit temps de retard

7

est un multiple d'un temps de retard élémentaire ayant une durée inférieure à celle de la fenêtre de référence.

3. Procédé de calage en phase selon l'une des revendications 1 et 2, caractérisé par le fait que les fenêtres constituées dans un intervalle de temps de référence ont toutes la même durée.

4. Procédé de calage en phase de trains numériques synchrones selon l'une des revendications 1, 2 et 3 pour la mise en phase desdits trains, caractérisé en ce que ladite fenêtre de référence est choisie de manière que les bits du train de référence (A) débutent en son milieu.

5. Dispositif de calage en phase de trains numériques synchrones, pour la mise en oeuvre du procédé selon l'une des revendications 1 à 4, chaque train étant constitué de bits ayant une durée T, comportant :
   - des moyens (4, 5) de génération de fenêtres temporelles à partir de l'un (A) des trains numériques synchrones, appelé train numérique de référence ;
   - des moyens (3, LR1,..., LR4) pour appliquer un retard éventuellement nul, à un deuxième train numérique synchrone (B) ;
   - des moyens (6), pour déterminer le retard à appliquer ;
       caractérisé en ce que les moyens pour déterminer le retard à appliquer comportent :
   - un comparateur de phase (5), relié aux moyens de génération de fenêtres (4) et recevant un troisième train numérique synchrone (BR), appelé train retardé, constitué par le deuxième train numérique (B) retardé ;
   - un circuit (6) de choix de retard, commandé par le comparateur de phase (5) ;
       et en ce que les moyens (3, LR1,..., LR4) pour appliquer un retard comportent :
   - n dispositifs à retard (LR1 à LR4), chacun appliquant au deuxième train numérique (B) un retard multiple d'un retard élémentaire ;
   - un dispositif d'aiguillage (3) possédant : n + 1 entrées recevant respectivement le deuxième train (B), l'un directement, et les n autres à travers les n dispositifs à retard (LR1 à LR4) respectivement ; une entrée de commande reliée à une sortie du circuit de choix de retard (6), et une sortie fournissant le train retardé (BR).

6. Dispositif de calage en phase selon la revendication 5, caractérisé par le fait qu'un premier dispositif à retard a un retard égal au retard élémentaire, les autres dispositifs à retard ayant un retard croissant d'un retard élémentaire d'un dispositif à retard à l'autre, le dernier dispositif à retard ayant un retard égal à n fois le retard élémentaire, le nombre n étant tel qu'un retard égal à n + 1 fois le retard élémentaire est égal à la durée T d'un bit.

7. Dispositif de calage en phase selon la revendication 5, caractérisé par le fait que le circuit de génération des fenêtres (4) comporte un circuit récupérateur de rythme (10) recevant le train de référence (A) et deux dispositifs à retard (11 et 11'), le circuit récupérateur de rythme délivrant un signal d'horloge (H) et les dispositifs à retard (11 et 11') délivrant deux signaux d'horloge retardés (HR1 et HR2) décalés entre eux d'une durée égale au quart de la durée T d'un bit.

8. Dispositif de calage en phase selon la revendication 7, caractérisé par le fait que le comparateur de phase (5) comporte une première (12) et une deuxième (13) bascules de type D, la première bascule ayant une entrée de données reliée en sortie de l'un (11') des dispositifs à retard du circuit de génération des fenêtres (4), la deuxième bascule ayant une entrée de données reliée en sortie de l'autre dispositif à retard (11) du circuit de génération des fenêtres (4), les deux bascules ayant une entrée d'horloge recevant le train retardé (BR), un premier filtre (14) relié à une sortie de la première bascule, et un deuxième filtre (15) relié à une sortie de la deuxième bascule.

9. Dispositif de calage en phase selon la revendication 8, caractérisé par le fait que le circuit de choix du retard (6) comporte une mémoire (16) pilotée par un signal d'horloge (h) de période grande par rapport à la durée T d'un bit et une mémoire morte programmable (17), la mémoire ayant une première entrée reliée au premier filtre, et une première sortie reliée à la mémoire morte, une deuxième entrée reliée au deuxième filtre et une deuxième sortie reliée à la mémoire morte, une troisième entrée reliée en sortie de la mémoire morte, et une troisième sortie reliée à une troisième entrée de la mémoire morte, ladite mémoire morte étant également reliée en sortie à l'entrée de commande du dispositif d'aiguillage (3).

10. Dispositif de calage en phase selon la revendication 8, caractérisé par le fait que le circuit de choix du retard (6) comprend un premier (30) comparateur et un deuxième (31) comparateur tous deux reliés en entrée aux deux filtres (14, 15) du comparateur de phase, et recevant sur une autre entrée un code relatif à la fenêtre de référence, une porte (34) de transmission ou blocage des impulsions d'un signal d'horloge (h) de période grande par rapport à la durée T d'un bit commandée par lesdits premier (30) et deuxième (31) comparateurs et reliée en sortie à une entrée horloge d'un compteur-décompteur par n (32) relié en sortie à l'entrée de commande du dispositif d'aiguillage (3) et commandé en comptage ou décomptage par le signal de sortie de l'un desdits premier (30) et deuxième (31) comparateurs.

## Claims

1. A method for adjusting the phase of synchronous bit streams, whereof each stream is constituted by bits having each a duration T, said methods consisting in:
   - taking successive time intervals as reference, called reference time intervals, each of which has a duration T and is defined from one of the synchronous bit streams (A),
   - delaying a second synchronous digital bit stream (3) to be synchronized in phase relative to the reference bit stream, by delaying said stream for a duration which might be nil,
   - characterized in that in order to determine the delay, the method consists in:
   - cutting each reference time interval into a plurality of timing windows (F1 to F4) which don't overlap, but fill together said duration,
   - detecting in each timing window transients of the beginning of a bit of a digital bit stream (BR), called delayed stream, constituted of the second bit stream (B) delayed by a previously determined delay,
   - deriving therefrom the timing window in which the transitions of the beginnning of the bit of the delayed stream (BR) are situated,
   - imposing on the second bit stream (B) another delay in order to bring the transitions of the beginning of a bit of the delayed stream (BR) into one of said windows, called reference window, thus corresponding to the phase desired for the second stream relative to the reference stream.

2. A phase adjustment method according to claim 1, characterized in that said time-delay is a multiple of a basic time delay the duration of which is shorter than that of the reference window.

3. A phase adjustment method according to claim 1 or 2, characterized in that all the windows constituted within a reference time interval have the same duration.

4. A method of adjusting the phases of synchronous bit streams according to any one of claims 1, 2 or 3, characterized in that said reference window is chosen in such a way that the bits of the reference stream (A) begin at its center.

5. A device of adjusting the phase of synchronous bit streams adapted to implement the method according to any one of claims 1 to 4, each stream being constituted of bits having a duration T, the device comprising:
   - means (4, 5) for generating timing windows from one (A) of the synchronous bit streams, called reference bit stream,
   - means (3, LR1, ..., LR4) for imposing upon a second synchronous bit stream (B) a delay which might be nil,
   - means (6) for determining the delay to be imposed,
     characterized in that the means for determining the delay to be imposed comprise:
   - a phase comparator (5) connected to the window generating means (4) and receiving a third synchronous bit stream (BR), called delayed stream, which is constituted of the delayed second bit stream (B),
   - a delay selector circuit (6) controlled by the phase comparator (5),
     and in that the means (3, LR1 ... LR4) for imposing a delay include:
   - n delay devices (LR1 to LR4), each of which imposes upon the second digital bit stream (B) a delay which is a multiple of a basic delay,
   - a switching device (3), fitted with n + 1 inputs adapted to receive the second stream (B), namely one input receiving it directly and the n other ones receiving it respectively via one of the n delay devices (LR1 to LR4), the switching device being further fitted with a control input which is

EP 0 253 281 B1

connected to an output of the delay selector circuit (6) and with an output delivering the delayed bitstream (BR).

6. A phase adjustment device according to claim 5, characterized in that a first delay device has a delay equal to the basic delay, whereas the other delay devices respectively have a delay which increases by one basic delay frm one delay device to the next one, the last delay device having a delay equal to n times said basic time delay, the number n being such that a time delay equal to n + 1 times the basic time delay is equal to the bit duration T.

7. A phase adjustment device according to claim 5, characterized in that the window generator circuit (4) comprises a clock recovery circuit (10) receiving the reference stream (A) and two time delay devices (11 and 11'), said clock recovery circuit being adapted to deliver a clock signal (H) and said time delay devices (11 and 11') being adapted to deliver two delayed clock signals (HR1 and HR2) which are offset relative to each other by a duration equal to one quarter of the bit duration T.

8. A phase adjustment device according to claim 7, characterized in that the phase comparator (5) comprises a first (12) and a second D type flip-flop (13), said first flip-flop having a data input connected to an output of one (11) of said time delay devices of said window generator circuit (4), said second flip-flop having a data input connected to the output of the other time delay device (11) of said window generator circuit (4), and both flip-flops having a clock input which receives the delayed bit stream (BR), a first filter (14) connected to an output of the first flip-flop and a second filter (15) connected to an output of the second flip-flop.

9. A phase adjustment device according to claim 8, characterized in that the delay selector circuit (6) comprises a memory (16) triggered by a clock signal (h) the period of which is long relative to said bit duration T and a programmable read-only memory (17), the memory being connected via a first input to the first filter, and via a first output to said read-only memory, a second input of the memory being connected to the second filter and a second output being connected to the read-only memory, a third input being connected to the output of the read-only memory and a third output being connected to a third input of the read-only memory, said read-only memory having moreover an output which is connected to the control input of said switching devic (3).

10. A phase adjustment device according to claim 8, characterized in that the delay selector circuit (6) comprises a first (30) and a second comparator (31), both having inputs connected to the two filters (14, 15) of the phase comparator and receiving via a further input a code relating to the reference window, a gate (34) for enabling or disabling transmission of pulses of a clock signal (h) having a period that is long relative to the bit duration T, said gate being controlled by said first (30) and second comparators (31) and having an output connected to a clock input of a counter/downcounter modulo n (32) having an output connected to the control input of said switching device (3) and controlled between counting and downcounting modes by the output signal from one of said first (30) and second comparators (31).

**Patentansprüche**

1. Verfahren zum Einstellen der Phasenlage von synchronen Bitfolgen, wobei jede Folge aus Bits mit der Dauer T besteht und das Verfahren darin besteht, daß
   - aufeinanderfolgende Zeitintervalle der Dauer T, die auf der Basis einer der synchronen Bitfolgen (A) definiert werden, als Bezugsintervalle genommen werden,
   - eine zweite synchrone Bitfolge (B), deren Phase relativ zur Bezugsfolge einzustellen ist, verzögert wird, indem sie um einen Verzögerungsbetrag von möglicherweise null verzögert wird, dadurch gekennzeichnet, daß zur Bestimmung der Verzögerung das Verfahren darin besteht,
   - jedes Bezugsintervall in eine Vielzahl von Zeitfenstern (F1 bis F4) zu unterteilen, die sich nicht überdecken, deren Gesamtheit jedoch die gesamte Dauer abdeckt,
   - in jedem Zeitfenster Bitanfangsübergänge einer Bitfolge (BR) zu erfassen, die verzögerte Folge genannt wird und aus der zweiten Bitfolge (B) besteht, die um einen vorher bestimmten Verzögerungsbetrag verzögert ist,
   - daraus dasjenige Zeitfenster abzuleiten, in welchem sich die Bitanfangsübergänge der verzöger- ten Folge (BR) befinden,

10

- die zweite Bitfolge (B) um eine weitere Verzögerung zu verzögern, derart, daß die Bitanfangsübergänge der verzögerten Folge (BR) in eines der Fenster, Bezugsfenster genannt, gelangen, welches für die zweite Bitfolge gewünschten Einstellung der Phasenlage relativ zur Bezugsfolge entspricht.

2. Phaseneinstellverfahren nach Anspruch 1, dadurch gekennzeichnet, daß die Verzögerungszeit ein Vielfaches einer Grundverzögerungszeit beträgt, deren Dauer kleiner als die des Bezugsfensters ist.

3. Phaseneinstellverfahren nach einem der Ansprüche 1 und 2, dadurch gekennzeichnet, daß die in einem Bezugsintervall gebildeten Fenster sämtlich die gleiche Dauer haben.

4. Verfahren zum Einstellen der Phasenlage von synchronen Bitfolgen gemäß einem der Ansprüche 1, 2 und 3 zur Einstellung der Phasenlage, dadurch gekennzeichnet, daß das Bezugsfenster so gewählt wird, daß die Bezugsbitfolgen (A) in seiner Mitte beginnen.

5. Einrichtung zum Einstellen der Phasenlage von synchronen Bitfolgen bei der Durchführung des Verfahrens nach einem der Ansprüche 1 bis 4, wobei jede Folge aus Bits mit einer Dauer T besteht und die Einrichtung folgende Komponenten aufweist
   - Mittel (4, 5) zum Erzeugen von Zeitfenstern aufgrund einer der synchronen Bitfolgen (A), Bezugsbitfolge genannt,
   - Mittel (3, LR1, ...LR4) zum Verzögern von möglicherweise null einer zweiten synchronen Bitfolge (B),
   - Mittel (6), die die anzuwendende Verzögerung bestimmen, dadurch gekennzeichnet, daß die Mittel zur Bestimmung der anzuwendenden Verzögerung folgende Komponenten aufweisen:
   - einen Phasenkomparator (5), der an die Mittel zur Fenstererzeugung (4) angeschlossen ist und einen dritten synchrone dritte Bitfolge (BR) empfängt, verzögerte Folge genannt, die aus der verzögerten zweiten digitalen Impulsfolge (B) besteht,
   - eine Verzögerungswahlschaltung (6), die vom Phasenkomparator (5) gesteuert wird, und daß die Mittel (3, LR1, ... LR4) zum Verzögern folgende Komponenten aufweisen:
   - n Verzögerungsschaltungen (LR1 bis LR4), die je der zweiten Bitfolge (B) eine Verzögerung verleihen, die ein Vielfaches einer Grundverzögerungszeit beträgt, und
   - eine Weicheneinrichtung (3) mit n + 1 Eingängen, welche die zweite Folge (B) einmal direkt und je einmal über die n Verzögerungsvorrichtungen (LR1 bis LR4) empfängt, mit einem Steuereingang, der an einen Ausgang der Verzögerungswahlschaltung (6) angeschlossen ist, und mit einem Ausgang, der die verzögerte Folge (BR) liefert.

6. Phaseneinstelleinrichtung nach Anspruch 5, dadurch gekennzeichnet, daß eine erste Verzögerungsvorrichtung eine Verzögerungszeit besitzt, die der Grundverzögerungszeit entspricht, während die anderen Verzögerungsvorrichtungen eine Verzögerungszeit besitzen, die sich jeweils um eine Grundverzögerungszeit von der benachbarten Verzögerungsvorrichtung unterscheiden, wobei die letzte Verzögerungsvorrichtung eine Verzögerungszeit besitzt, die dem n-fachen der Grundverzögerungszeit entspricht und die Zahl n so gewählt ist, daß eine dem n + 1-fachen der Grundverzögerung entsprechende Verzögerung der Dauer T eines Bits entspricht.

7. Phaseneinstelleinrichtung nach Anspruch 5, dadurch gekennzeichnet, daß die Fenstererzeugungsschaltung (4) einen Taktwiedergewinnungskreis (10), der die Bezugsbitfolge (A) empfängt, und zwei Verzögerungsvorrichtungen (11 und 11') aufweist, wobei der Taktwiedergewinnungskreis ein Taktsignal (H) liefert, während die Verzögerungsvorrichtungen (11 und 11') zwei verzögerte Taktsignale (HR1 und HR2) liefern, die gegeneinander um eine Zeitdauer versetzt sind, welche einem Viertel der Dauer T eines Bits entspricht.

8. Phaseneinstelleinrichtung nach Anspruch 7, dadurch gekennzeichnet, daß der Phasenkomparator (5) eine erste (12) und eine zweite D-Typ Kippstufe (13) aufweist, wobei die erste Kippstufe mit einem Dateneingang an den Ausgang einer der Verzögerungsvorrichtungen (11') der Fenstererzeugungsschaltung (4) angeschlossen ist, während die zweite Kippstufe mit einem Dateneingang an den Ausgang der anderen Verzögerungsvorrichtung (11) der Fenstererzeugungsschaltung (4) angeschlossen ist, und beide Kippstufen einen die verzögerte Bitfolge (BR) empfangenden Takteingang besitzen, und daß der Komparator ein erstes, an einen Ausgang der ersten Kippstufe angeschlossenes Filter (14) und ein zweites, an einen Ausgang de zweiten Kippstufe angeschlossenes Filter (15) aufweist.

9. Phaseneinstelleinrichtung nach Anspruch 8, dadurch gekennzeichnet, daß die Verzögerungswahlschaltung (6) einen Speicher (16), der von einem Taktsignal (h) mit einer in Bezug auf die Dauer T eines Bits großen Periode gesteuert wird, und einem programmierbaren Festspeicher (17) aufweist, wobei der Speicher mit einem ersten Eingang an das erste Filter und mit einem ersten Ausgang an den Festspeicher, mit einem zweiten Eingang an das zweite Filter und einem zweiten Ausgang an den Festspeicher, und mit einem dritten Ausgang an einen dritten Eingang des Festspeichers angeschlossen ist, wobei der Festspeicher ebenfalls mit seinem Ausgang an den Steuereingang der Weicheneinrichtung (3) angeschlossen ist.

10. Phaseneinstelleinrichtung nach Anspruch 8, dadurch gekennzeichnet, daß die Verzögerungswahlschaltung (6) einen ersten Komparator (30) und einen zweiten Komparator (31) aufweist, die beide eingangsseitig an die beiden Filter (14, 15) des Phasenkomparators angeschlossen sind und über einen anderen Eingang ein das Bezugsfenster bezeichnendes Kodesignal empfangen, und daß die Schaltung ein Durchlaß- oder Sperrtor (34) für Impulse eines Taktsignals (h) mit einer im Vergleich zur Dauer T eines Bits großen Periode aufweist, wobei das Tor durch den ersten (30) und den zweiten Komparator (31) gesteuert wird und ausgangsseitig an einen Takteingang eines Aufwärts-Abwärtszählers modulo n angeschlossen ist, der seinerseits mit dem Ausgang an den Steuereingang der Weicheneinrichtung (3) angeschlossen ist und zum Aufwärts- oder Abwärtszählen durch das Ausgangssignal des ersten (30) oder des zweiten Komparators (31) gesteuert wird.

# FIG.1

# FIG.2

FIG. 3

EP 0 253 281 B1

# FIG.4

# FIG.5

# FIG.6

EP 0 253 281 B1

## FIG.7

## FIG.8